# EUROPEAN PATENT SPECIFICATION

(11) **EP 4 458 628 B1**
(45) Date of publication and mention of the grant of the patent: **14.01.2026**
(21) Application number: 24171299.1
(22) Date of filing: 19.04.2024
(51) Int. Cl.: B60T 8/17

(54) **RDPC FOR PRIMARY SECONDARY ARCHITECTURE**
RDPC FÜR PRIMÄRE SEKUNDÄRARCHITEKTUR
RDPC POUR ARCHITECTURE SECONDAIRE PRIMAIRE

(30) Priority: 02.05.2023 US 202318311041
(43) Date of publication of application: 06.11.2024
(73) Proprietor: Goodrich Corporation, Charlotte, NC 28217-4578 (US)
(72) Inventor: GEORGIN, Marc J., Oakwood, OH (US); POISSON, Richard A., Avon, CT (US)
(74) Representative: Dehns

(56) References cited:
- US-A1- 2008 258 548
- US-A1- 2015 291 279
- US-B2- 8 666 627
- US-B2- 9 656 641

## Description

### FIELD

The present disclosure generally relates to aircraft brake systems, and more particularly to aircraft braking system safety features.

### BACKGROUND

Aircraft typically utilize brake systems on wheels to slow or stop the aircraft during landings, taxiing, and rejected takeoffs. The brake systems generally employ a brake stack comprising a series of friction disks that may be forced into sliding contact with one another during brake actuation to slow or stop the aircraft. Brake systems are typically either hydraulic or electric. Generally, electric brakes are heavier than the hydraulic versions, in part due to additional complexities of the electric brake actuators, parking brake mechanisms within the electric brake actuators, and wiring between the electric brake actuators and the brake control unit. US 8 666 627 relates to an aircraft brake control architecture.

### SUMMARY

Disclosed herein is a system according to claim 1, which defines the invention. The system includes a primary brake control unit, a secondary brake control unit, a first remote data power concentrator configured to receive a first command from the primary brake control unit and a second command from the secondary brake control unit, and an electric brake actuator configured to receive the first command or the second command from the first remote data power concentrator in response to a first signal.

In various embodiments, the primary brake control unit is in communication with the secondary brake control unit and wherein the first remote data power concentrator transmits the first command received from the primary brake control unit in response to the primary brake control unit and the secondary brake control unit determining that the primary brake control unit is an active brake control unit. The system further includes a first electric brake actuator controller coupled to the first electric brake actuator and a first actuator control disposed in the first electric brake actuator controller, the first actuator control configured to receive the first command from the primary brake control unit and transmit the first command to the first remote data power concentrator.

The system further includes a second electric brake actuator controller coupled to the electric brake actuator and a second actuator control disposed in the second electric brake actuator controller, the second actuator control configured to receive the second command from the secondary brake control unit and transmit the second command to the first remote data power concentrator. In various embodiments, the first remote data power concentrator is configured to transmit the first command from the first actuator control to the electric brake actuator and ignore the second command from the second actuator control in response to the first signal.

In various embodiments, the first remote data power concentrator is configured to transmit the second command from the second actuator control and ignore the first command from the first actuator control in response to a second signal. In various embodiments, the first command and the second command include the same information.

Also disclosed herein is a brake system including a wheel, an electric brake actuator configured to apply a braking force to the wheel, a remote data power concentrator configured to send a brake command to apply the braking force to the electric brake actuator, a primary brake control unit configured to send a first command to the remote data power concentrator, and a secondary brake control unit configured to send a second command to the remote data power concentrator, wherein the brake command is at least one of the first command or the second command.

In various embodiments, the primary brake control unit is in communication with the secondary brake control unit and are configured to determine an active brake control unit and wherein the brake command is the first command in response to the primary brake control unit being the active brake control unit. In various embodiments, the brake command is the second command received from the secondary brake control unit in response to the secondary brake control unit being the active brake control unit.

In various embodiments, the brake system further includes a primary electric brake controller coupled to the electric brake actuator and a first actuator control disposed in the primary electric brake controller, the first actuator control configured to receive the first command and transmit the first command to the remote data power concentrator, wherein the remote data power concentrator sends the first command to the electric brake actuator in response to a first signal. In various embodiments, the brake system further includes a secondary electric brake controller coupled to the electric brake actuator and a second actuator control disposed in the secondary electric brake controller, the second actuator control configured to receive the second command and transmit the second command to the remote data power concentrator, wherein the remote data power concentrator sends the second command to the electric brake actuator in response to a second signal.

In various embodiments, the first signal identifies the primary brake control unit as an active brake control unit and the second signal identifies the secondary brake control unit as the active brake control unit. In various embodiments, the remote data power concentrator receives the second signal in response to an error in the primary brake control unit or primary electric brake controller.

Also disclosed herein is an aircraft including a landing gear assembly including a wheel and a brake assembly coupled to the wheel. The brake assembly includes an electric brake actuator configured to apply a braking force to the wheel, a first actuator control configured to send a first command, a second actuator control configured to send a second command, and a remote data power concentrator configured to receive the first command and the second command and send the first command to the electric brake actuator and ignore the second command in response to a first signal.

In various embodiments, the remote data power concentrator is further configured to send the second command to the electric brake actuator and ignore the first command in response to a second signal. In various embodiments, the remote data power concentrator receives the second signal in response to an error received by the first actuator control.

In various embodiments, the first command and the second command are the same, the first signal identifying a primary controller for the electric brake actuator. In various embodiments, the aircraft further includes a brake pedal configured to send a third signal that is an indication of an amount of braking force to apply to the electric brake actuator, a primary brake control unit configured to receive the third signal and send the first command to the first actuator control in response to the third signal, and a secondary brake control unit configured to receive the third signal and send the second command to the second actuator control in response to the third signal. In various embodiments, the primary brake control unit communicates with the secondary brake control unit to determine an active brake control unit and wherein the primary brake control unit sends the first signal in response to determining that the primary brake control unit is the active brake control unit.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present invention pointed out and distinctly claimed in the concluding portion of the specification. A more complete understanding of the present invention, however, may best be obtained by referring to the following detailed description and claims in connection with the following drawings. While the drawings illustrate various embodiments employing the principles described herein, the drawings do not limit the scope of the claims.
FIG. 1 illustrates an aircraft having multiple landing gear and brakes, in accordance with various embodiments.
FIG. 2 illustrates an aircraft brake control system for controlling multiple brakes, in accordance with various embodiments.
FIGS. 3A and 3B illustrate a brake system schematic for controlling multiple brakes in an aircraft brake control system, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein is a remote data and power concentrator (RDPC) for use in a primary/secondary architecture of an aircraft brake system. Generally, aircraft brake systems include one or more brakes that each have one or more electric brake actuators (EBAs), where the EBAs are controlled by a brake control unit (BCU), also referred to as electric brake actuator controllers (EBACs) or actuator control box. The BCU receives input from the pilot (e.g., via an input device such as pedals) and commands the EBAs in each brake to operate. Typically, a brake includes four EBAs and each EBA uses multiple wires (typically, about 14 wires) to connect to the BCU. Three wires for motor command of the EBAs, 4 wires for a resolver to provide rotor position, 4 wires for a load cell signal that provides force feedback, 2 wires for a park brake command, and a ground wire. The RDPC architecture disclosed herein provides connections and functionality for the primary BCU or the secondary BCU to control each brake and its associated EBAs without increasing the number of actuators used in each brake or significantly increasing the number of wires used for each brake.

In various embodiments, the RDPC includes a housing for electronics and wiring connected to the primary BCU, the secondary BCU, and the EBAs. In various embodiments, one RDPC is connected to each EBA. In various embodiments, the RDPC may be integrated into the EBA or mounted on the brake structure or on a landing gear structure. In various embodiments, the RDPC switches the wiring from the associated EBA to the proper BCU (i.e., primary BCU or secondary BCU). Thus, each BCU can independently control the EBAs depending on which system is active as decided by the BCUs. The RDPC architecture will be described in greater detail below. In various embodiments, the RDPC architecture disclosed herein provides improved braking and control redundancy in the event of malfunction or failure and maintains full system performance in the event of a primary BCU or secondary BCU failure.

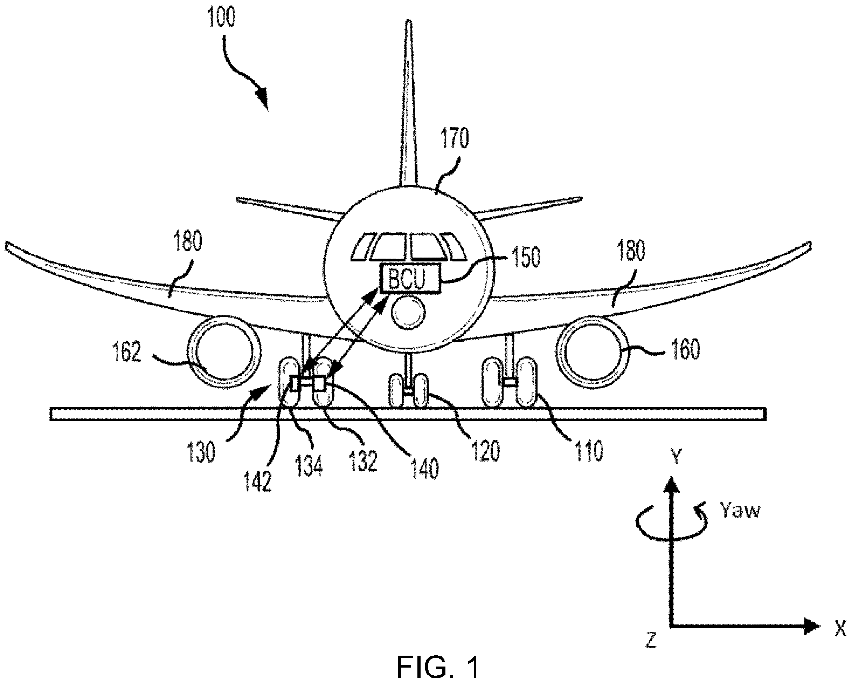

Referring now to FIG. 1, an aircraft 100 including multiple landing gears including a first landing gear 110, a second landing gear 120, and a third landing gear 130 is illustrated, in accordance with various embodiments. Each landing gear may include one or more wheel assemblies. For example, the third landing gear 130 includes an inner wheel assembly 132 and an outer wheel assembly 134.

The aircraft 100 may further include one or more brakes coupled to each wheel assembly. For example, a first brake 140 may be coupled to the inner wheel assembly 132, and a second brake 142 may be coupled to the outer wheel assembly 134. The first brake 140 may apply a braking force to the inner wheel assembly 132 upon receiving a brake command. Similarly, the second brake 142 may apply a braking force to the outer wheel assembly 134 upon receiving a brake command.

The aircraft 100 may further include a brake control unit (BCU) or brake controller 150. The brake controller 150 may include one or more processors and one or more tangible, non-transitory memories and be capable of implementing logic. The processor can be a general purpose processor, a digital signal processor (DSP), an application specific integrated circuit (ASIC), a field programmable gate array (FPGA) or other programmable logic device, discrete gate or transistor logic, discrete hardware components, or any combination thereof. In various embodiments, the brake controller 150 may be specifically designed for controlling operation of aircraft brakes. The brake controller 150 may control operation of the first brake 140 and the second brake 142 under normal operating conditions.

The aircraft 100 further comprises a first gas turbine engine 160 and a second gas turbine engine 162. Although described herein with respect to gas turbine engines 160, 162, the present disclosure is not limited in this regard. For example, electric engines, hydrogen engines, gas turbine engines, or any combination may be within the scope of this disclosure. The first gas turbine engine 160 and the second gas turbine engine 162 are disposed on opposite sides of a fuselage 170 of the aircraft 100. Although illustrated as being coupled to wings 180 of the aircraft 100, the present disclosure is not limited in this regard. For example, gas turbine engines 160, 162 may be coupled to the fuselage 170, in accordance with various embodiments. The gas turbine engines 160, 162 may be controlled by a pilot to generate thrust to accelerate the aircraft 100. In various embodiments, the first gas turbine engine 160 is on a left side of the aircraft 100 and the second gas turbine engine 162 is on a right side of the aircraft 100. Left and right as disclosed herein refer to a direction determined from a center of the fuselage 170 while facing a forward direction (i.e., a direction defined from a tail to a front end of aircraft 100).

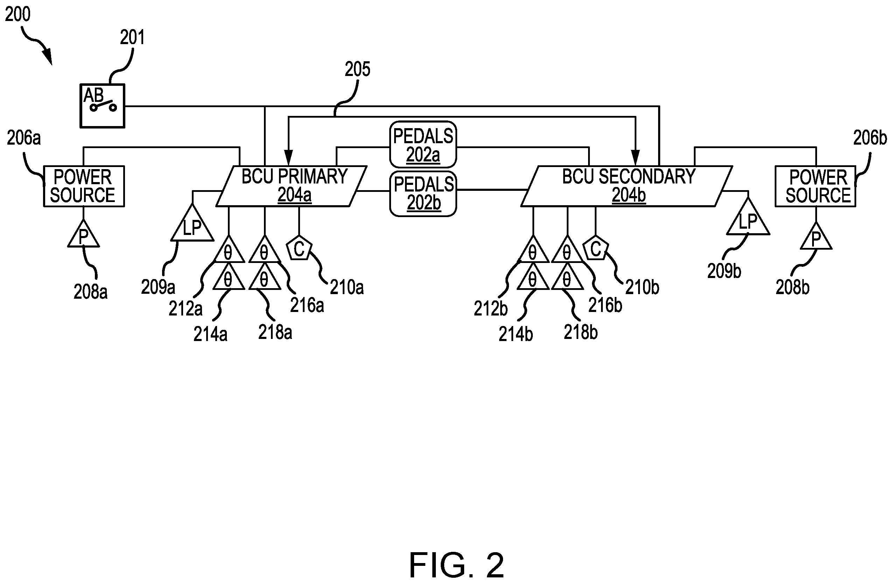

Referring now to FIG. 2, an aircraft brake control system 200 is illustrated, in accordance with various embodiments. Aircraft brake control system 200, hereinafter referred to as system 200, includes an auto-brake (AB) control 201, a first set of brake pedals 202a, a second set of brake pedals 202b, a primary brake control unit (BCU) 204a, a secondary BCU 204b, a first power source 206a, and a second power source 206b. Primary BCU 204a and secondary BCU 204b are logically connected, as illustrated by line 205, and in communication with each other to receive inputs from AB control 201, brake pedals 202a, and brake pedals 202b. Additionally, while both primary BCU 204a and secondary BCU 204b receive and process all input simultaneously, they communicate to determine which BCU is responsible for controlling the brakes of the aircraft (e.g., the active brake control unit) with the other acting as a backup, or failsafe, BCU. Primary BCU 204a and secondary BCU 204b may further communicate to determine which BCU is the active brake control unit via communication line 205. In various embodiments, primary BCU 204a may assigned to be the active BCU and secondary BCU 204b may be assigned to be the backup BCU. Secondary BCU 204b may be determined to be the active BCU in response to a failure in primary BCU 204a. In various embodiments, a failure in primary BCU 204a may include a power failure, a communication failure, or a logical failure, among others. First power source 206a provides power to primary BCU 204a and second power source 206b provides power to secondary BCU 204b. AB control 201 may include one or more switches, dials, knobs, buttons, or any other suitable means for selecting a pilot desired braking command and providing the command as input to primary BCU 204a and secondary BCU 204b.

System 200 further includes a first high voltage power connection 208a, a second high voltage power connection 208b, a first low voltage power connection 209a, a second low power voltage connection 209b, a first control connection 210a, a second control connection 210b, first wheel speed sensor connections 212a, 214a, 216a, 218a, and second wheel speed sensor connections 212b, 214b, 216b, 218b. First high voltage power connection 208a and second high voltage power connection 208b provide power to electric brake actuators (EBAs) of aircraft brakes. First control connection 210a and second control connection 210b provide control data to the EBAs of the aircraft brakes. Wheel speed sensor connections 212a, 212b, 214a, 214b, 216a, 216b, 218a, 218b provide a connection to wheel speed sensors on wheels of the aircraft to determine the speed of the wheels. As illustrated in FIG. 2, each connection is duplicated so that one set of connections is controlled by primary BCU 204a and the other set of connections is controlled by secondary BCU 204b. This provides a redundant, failsafe architecture to improve the safety of the braking system and the aircraft as a whole.

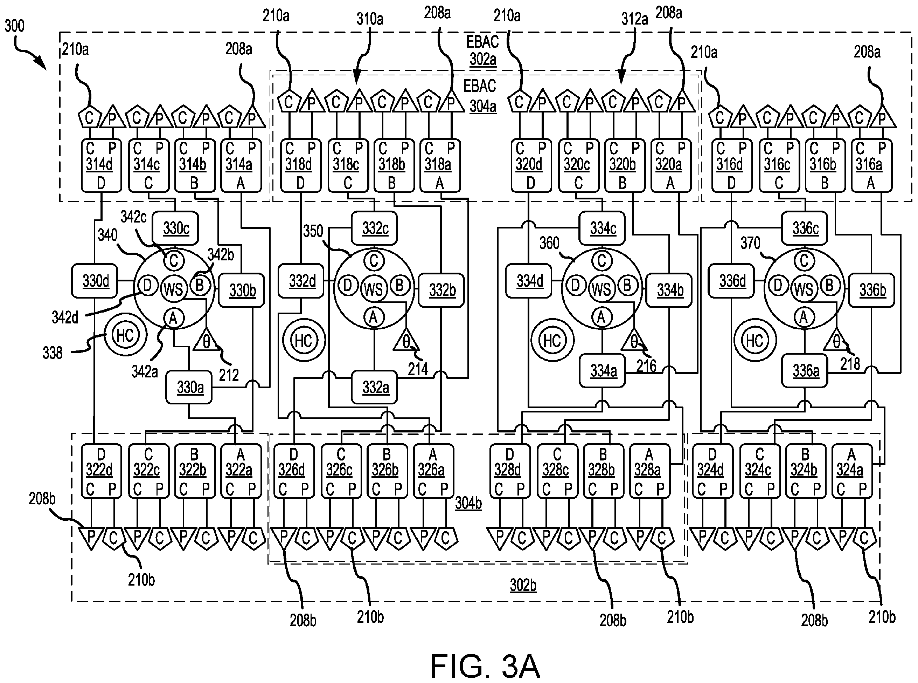

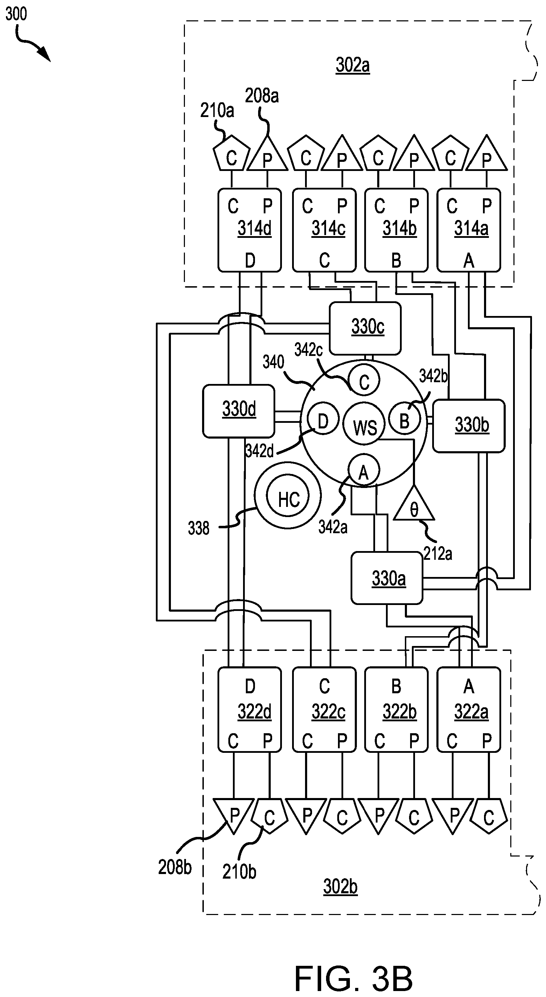

Referring now to FIGS. 3A and 3B, a brake system schematic 300 is illustrated, in accordance with various embodiments. FIG. 3A illustrates brake system schematic 300 for a brake system including four brakes. FIG. 3B illustrates a portion of brake system schematic 300 for a single brake. Brake system schematic 300, hereinafter referred to as schematic 300, , a left outboard wheel 340, a left inboard wheel 350, a right inboard wheel 360, and a right outboard wheel 370. Each wheel 340, 350, 360, 370 includes four electric brake actuators (EBAs) labeled A, B, C, and D, a wheel speed sensor labeled WS, and a hub cap labeled HC. Each wheel speed sensor WS is electrically and logically connected to primary BCU 204a and secondary BCU 204b, both of which are illustrated in FIG. 2. For example, and simplicity of discussion, left outboard wheel 340 includes a first EBA 342a, a second EBA 342b, a third EBA 342c, and a fourth EBA 342d, a wheel speed sensor WS connected to BCUs 204a, 204b by first wheel speed sensor connection 212, and a hub cap 338. Schematic 300 further includes connections to primary BCU 204a and secondary BCU 204b, as illustrated in FIG. 2, including first high power connection 208a, second high power connection 208b, first control connection 210a, second control connection 210b, and wheel speed sensors 312, 314, 316, 18 that connect to system 200 described in FIG. 2. Wheel speed sensors 212, 214, 216, 218 are connected to both first wheel speed sensor connections 212a, 214a, 216a, 218a and second wheel speed sensor connections 212b, 214b, 216b, 218b.

Each EBA (e.g., A, B, C, and D) on each wheel 340, 350, 360, 370 is electrically coupled to a remote data and power concentrator (RDPC). For example, first EBA 342a is coupled to first RDPC 330a, second EBA 342b is coupled to second RDPC 330b, third EBA 342c is coupled to third RDPC 330c, and fourth EBA 342d is coupled to fourth RDPC 330d. Each RDPC 330a-330d is configured to receive power and data from both primary BCU 204a and secondary BCU 204b and transmit the power and data from a single BCU, either primary BCU 204a or secondary BCU 204b, to the associated EBA 342a-342d. The power and data transmitted by RDPC 330a-330d activates EBAs 342a-342d to apply a braking force as instructed by primary BCU 204a or secondary BCU 204d. Generally, in the absence of a failure, both primary BCU 204a and secondary BCU 204b provide the same instructions to EBAs 342a-342d through RDPCs 330a-330d.

Schematic 300 further includes a primary outboard electronic brake actuator controller (EBAC) 302a, a secondary outboard EBAC 302b, a primary inboard EBAC 304a, and a secondary inboard EBAC 304b. Primary outboard EBAC 302a and secondary outboard EBAC 302b are logically and electrically connected to left outboard wheel 340 and right outboard wheel 370. Primary inboard EBAC 304a and secondary inboard EBAC 304b are logically and electrically connected to left inboard wheel 350 and right inboard wheel 360. In various embodiments, primary BCU 204a controls primary outboard EBAC 302a and primary inboard EBAC 304a and secondary BCU 204b controls secondary outboard EBAC 302b and secondary inboard EBAC 304b.

Primary outboard EBAC 302a includes a first actuator control 314a, a second actuator control 314b, a third actuator control 314c, and a fourth actuator control 314d. Each actuator control 314a-314d is connected to primary BCU 204a by first control connection 210a and receives power through first high voltage power connection 208a. First actuator control 314a is configured to receive power and control data from primary BCU 204a and transmit the power and control data to first RDPC 330a and then to first EBA 342a. Second actuator control 314b is configured to receive power and control data from primary BCU 204a and transmit the power and control data to second RDPC 330b and then to second EBA 342b. Third actuator control 314c is configured to receive power and control data from primary BCU 204a and transmit the power and control data to third RDPC 330c and then to third EBA 342c. Fourth actuator control 314d is configured to receive power and control data from primary BCU 204a and transmit the power and control data to fourth RDPC 330d and then to fourth EBA 342d.

Primary outboard EBAC 302a further includes actuator controls 316a-316d that are connected to primary BCU 204a by first control connection 210a and first high voltage power connection 208a. Actuator controls 316a-316d are configured to receive power and control data from primary BCU 204a and transmit the power and control data to RDPCs 336a-336d and then to EBAs A-D on wheel 370.

Primary inboard EBAC 304a includes actuator controls 318a-318d and actuator controls 320a-320d that are connected to primary BCU 204a by first control connection 210a and first high voltage power connection 208a. Actuator controls 318a-318d are configured to receive power and control data from primary BCU 204a and transmit the power and control data to RDPCs 332a-332d and then to EBAs A-D, respectively, on wheel 350. Actuator controls 320a-320d are configured to receive power and control data from primary BCU 204a and transmit the power and control data to RDPCs 334a-334d and then to EBAs A-D on wheel 360.

Secondary outboard EBAC 302b includes actuator controls 322a-322d and actuator controls 324a-324d that are connected to secondary BCU 204b by second control connection 210b and second high voltage power connection 208b. Actuator controls 322a-322d are configured to receive power and control data from secondary BCU 204b and transmit the power and control data to RDPCs 330a-330d and then to EBAs 342a-342d, respectively, on wheel 340. Actuator controls 324a-324d are configured to receive power and control data from secondary BCU 204b and transmit the power and control data to RDPCs 336a-336d and then to EBAs A-D, respectively, on wheel 350.

Secondary inboard EBAC 304b includes actuator controls 326a-326d and actuator controls 328a-328d that are connected to secondary BCU 204b by second control connection 210b and second high voltage power connection 208b. Actuator controls 326a-326d are configured to receive power and control data from secondary BCU 204b and transmit the power and control data to RDPCs 332a-332d and then to EBAs A-D, respectively, on wheel 350. Actuator controls 328a-328d are configured to receive power and control data from secondary BCU 204b and transmit the power and control data to RDPCs 334a-334d and then to EBAs A-D, respectively, on wheel 360.

Therefore, it should be understood that the various groupings of components as described above (e.g., a, b, c, d) on each wheel work together as a unit. For example, and referring to left outboard wheel 340, first actuator control 314a, first actuator control 322a, first RDPC 330a, and first EBA 342a work together as a unit. Second actuator control 314b, second actuator control 322b, second RDPC 330b, and second EBA 342b work together as a unit. Third actuator control 314c, third actuator control 322c, third RDPC 330c, and third EBA 342c work together as a unit. Fourth actuator control 314d, fourth actuator control 322d, fourth RDPC 330d, and fourth EBA 342d work together as a unit.

Referring now to FIG. 3B, a portion of schematic 300 is illustrated, in accordance with various embodiments. FIG. 3B illustrates the left outboard portion of schematic 300 including primary outboard EBAC 302a, secondary outboard EBAC 302b, left outboard wheel 340, actuator controls 314a-314d, actuator controls 322a-322d, RDPCs 330a-330d, EBAs 342a-342d, wheel speed sensor WS, and hub cap 338. FIG. 3B provides more detail for the individual connections between the respective actuator controls 314a-314d, 322a-322d, RDPCs 330a-330d, and EBAs 342a-342b. It will be appreciated that while the description below is directed to left outboard wheel 340 and the associated components of the brake system, the limited scope of description is for ease of discussion. Similar description applies to each of the other wheels 350, 360, 370 and their corresponding brake system components.

With respect to primary outboard EBAC 302a, first actuator control 314a includes two connections to first RDPC 330a, a first connection to control first EBA 342a and a second connection to control a parking brake function of first EBA 342a. In various embodiments, each of the first and second connections may include power and data. In various embodiments, each of the first and second connections may include multiple separate wires and/or connectors to provide the power and the data independent of one another. Second actuator control 314b includes two connections to second RDPC 330b, a first connection to control second EBA 342b and a second connection to control a parking brake function of second EBA 342b. Third actuator control 314c includes two connections to third RDPC 330c, a first connection to control third EBA 342c and a second connection to control a parking brake function of third EBA 342c. Fourth actuator control 314d includes two connections to fourth RDPC 330d, a first connection to control fourth EBA 342d and a second connection to control a parking brake function of fourth EBA 342d.

With respect to secondary outboard EBAC 302b, first actuator control 322a includes two connections to first RDPC 330a, a first connection to control first EBA 342a and a second connection to control a parking brake function of first EBA 342a. Second actuator control 322b includes two connections to second RDPC 330b, a first connection to control second EBA 342b and a second connection to control a parking brake function of second EBA 342b. Third actuator control 322c includes two connections to third RDPC 330c, a first connection to control third EBA 342c and a second connection to control a parking brake function of third EBA 342c. Fourth actuator control 322d includes two connections to fourth RDPC 330d, a first connection to control fourth EBA 342d and a second connection to control a parking brake function of fourth EBA 342d.

Schematic 300 provides a robust primary/secondary architecture for an aircraft brake system. Each RDPC 330a-330d is in electrical and logical communication with both primary BCU 204a and secondary BCU 204b through EBACs 302a, 302b, 304a, 304b. This provides a safe and secure failover mechanism should either the primary BCU 204a or secondary BCU 204b have an error. Additionally, primary BCU 204a and secondary BCU 204b may communicate independently with each of primary outboard EBAC 302a, secondary outboard EBAC 302b, primary inboard EBAC 304a, and secondary inboard EBAC 304b should anyone one have an error. In various embodiments, each RDPC 330a-330d may switch inputs (e.g., from primary BCU 204a to secondary BCU 204b) near instantaneously in response to a command from one of primary BCU 204a or secondary BCU 204b. In various embodiments, each RDPC 330a-330d may switch inputs (e.g., from primary BCU 204a to secondary BCU 204b) in response to not receiving power and/or data from one of primary BCU 204a or secondary BCU 204b.

In various embodiments, each RDPC 330a-330d may switch inputs (e.g., from primary outboard EBAC 302a to secondary outboard EBAC 302b) in response to a command from either of the associated control actuators 314a-314d, 322a-322d. In various embodiments, each RDPC 330a-330d may switch inputs (e.g., from primary outboard EBAC 302a to secondary outboard EBAC 302b) in response to not receiving power and/or data from one of the associated control actuators 314a-314d, 322a-322d.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the invention is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A system, comprising:
a primary brake control unit (204a);
a secondary brake control unit (204b);
a first remote data power concentrator configured to receive a first command from the primary brake control unit (204a) and a second command from the secondary brake control unit (204b);
an electric brake actuator configured to receive the first command or the second command from the first remote data power concentrator in response to a first signal;
a first electric brake actuator controller coupled to the electric brake actuator;
a first actuator control disposed in the first electric brake actuator controller, the first actuator control configured to receive the first command from the primary brake control unit (204a) and transmit the first command to the first remote data power concentrator;
**characterised by**
a second electric brake actuator controller coupled to the electric brake actuator; and
a second actuator control disposed in the second electric brake actuator controller, the second actuator control configured to receive the second command from the secondary brake control unit (204b) and transmit the second command to the first remote data power concentrator.

2. The system of claim **1,** wherein the primary brake control unit (204a) is in communication with the secondary brake control unit (204b) and wherein the first remote data power concentrator transmits the first command received from the primary brake control unit (204a) in response to the primary brake control unit (204a) and the secondary brake control unit (204b) determining that the primary brake control unit (204a) is an active brake control unit.

3. The system of claim 1 or 2, wherein the first remote data power concentrator is configured to transmit the first command from the first actuator control to the electric brake actuator and ignore the second command from the second actuator control in response to the first signal.

4. The system of claim 3, wherein the first remote data power concentrator is configured to transmit the second command from the second actuator control and ignore the first command from the first actuator control in response to a second signal.

5. The system of any preceding claim, wherein the first command and the second command include the same information.

6. A brake system, comprising:
a wheel;
the system of claim 1, wherein the electric brake actuator is configured to apply a braking force to the wheel;
wherein the first remote data power concentrator is configured to send a brake command to apply the braking force to the electric brake actuator;
wherein the primary brake control unit (204a) is configured to send a first command to the remote data power concentrator; and
wherein the secondary brake control unit (204b) is configured to send a second command to the remote data power concentrator, wherein the brake command is at least one of the first command or the second command.

7. The brake system of claim 6, wherein the primary brake control unit (204a) is in communication with the secondary brake control unit (204b) and are configured to determine an active brake control unit and wherein the brake command is the first command in response to the primary brake control unit (204a) being the active brake control unit.

8. The brake system of claim 7, wherein the brake command is the second command received from the secondary brake control unit (204b) in response to the secondary brake control unit (204b) being the active brake control unit.

9. The brake system of any of claims 6-8, wherein the first remote data power concentrator sends the first command to the electric brake actuator in response to a first signal.

10. The brake system of claim 9, wherein the first remote data power concentrator sends the second command to the electric brake actuator in response to a second signal.

11. The brake system of claim 10, wherein the first signal identifies the primary brake control unit (204a) as an active brake control unit and the second signal identifies the secondary brake control unit (204b) as the active brake control unit.

12. The brake system of claim 11, wherein the remote data power concentrator receives the second signal in response to an error in the primary brake control unit (204a).

13. An aircraft, comprising:
the system of claim 1, wherein the aircraft includes a landing gear assembly including the wheel.

## Patentansprüche

1. System, umfassend:
eine primäre Bremssteuereinheit (204a);
eine sekundäre Bremssteuereinheit (204b);
einen ersten Ferndatenleistungskonzentrator, der ausgelegt ist, einen ersten Befehl von der primären Bremssteuereinheit (204a) und einen zweiten Befehl von der sekundären Bremssteuereinheit (204b) zu empfangen;
einen elektrischen Bremsaktuator, der ausgelegt ist, den ersten Befehl oder den zweiten Befehl von dem ersten Ferndatenleistungskonzentrator als Reaktion auf ein erstes Signal zu empfangen;
eine erste Steuerung für den elektrischen Bremsaktuator, die mit dem elektrischen Bremsaktuator gekoppelt ist;
eine erste Aktuatorsteuerung, die in der ersten Steuerung für den elektrischen Bremsaktuator angeordnet ist, wobei die erste Aktuatorsteuerung ausgelegt ist, den ersten Befehl von der primären Bremssteuereinheit (204a) zu empfangen und den ersten Befehl an den ersten Ferndatenleistungskonzentrator zu übertragen; **gekennzeichnet durch**
eine zweite Steuerung für den elektrischen Bremsaktuator, die mit dem elektrischen Bremsaktuator gekoppelt ist; und
eine zweite Aktuatorsteuerung, die in der zweiten Steuerung für den elektrischen Bremsaktuator angeordnet ist, wobei die zweite Aktuatorsteuerung ausgelegt ist, den zweiten Befehl von der sekundären Bremssteuereinheit (204b) zu empfangen und den zweiten Befehl an den ersten Ferndatenleistungskonzentrator zu übertragen.

2. System nach Anspruch 1, wobei die primäre Bremssteuereinheit (204a) in Kommunikation mit der sekundären Bremssteuereinheit (204b) steht und wobei der erste Ferndatenleistungskonzentrator den ersten Befehl, der von der primären Bremssteuereinheit (204a) empfangen wurde, als Reaktion darauf überträgt, dass die primäre Bremssteuereinheit (204a) und die sekundäre Bremssteuereinheit (204b) bestimmen, dass die primäre Bremssteuereinheit (204a) eine aktive Bremssteuereinheit ist.

3. System nach Anspruch 1 oder 2, wobei der erste Ferndatenleistungskonzentrator ausgelegt ist, den ersten Befehl von der ersten Aktuatorsteuerung an den elektrischen Bremsaktuator zu übertragen und den zweiten Befehl von der zweiten Aktuatorsteuerung als Reaktion auf das erste Signal zu ignorieren.

4. System nach Anspruch 3, wobei der erste Ferndatenleistungskonzentrator ausgelegt ist, den zweiten Befehl von der zweiten Aktuatorsteuerung zu übertragen und den ersten Befehl von der ersten Aktuatorsteuerung als Reaktion auf ein zweites Signal zu ignorieren.

5. System nach einem der vorhergehenden Ansprüche, wobei der erste Befehl und der zweite Befehl dieselbe Information beinhalten.

6. Bremssystem, umfassend:
ein Rad;
das System nach Anspruch 1, wobei der elektrische Bremsaktuator ausgelegt ist, eine Bremskraft auf das Rad aufzubringen;
wobei der erste Ferndatenleistungskonzentrator ausgelegt ist, einen Bremsbefehl zum Aufbringen der Bremskraft an den elektrischen Bremsaktuator zu senden;
wobei die primäre Bremssteuereinheit (204a) ausgelegt ist, einen ersten Befehl an den Ferndatenleistungskonzentrator zu senden; und
wobei die sekundäre Bremssteuereinheit (204b) ausgelegt ist, einen zweiten Befehl an den Ferndatenleistungskonzentrator zu senden, wobei der Bremsbefehl mindestens einer von dem ersten Befehl oder dem zweiten Befehl ist.

7. Bremssystem nach Anspruch 6, wobei die primäre Bremssteuereinheit (204a) in Kommunikation mit der sekundären Bremssteuereinheit (204b) steht und ausgelegt sind, eine aktive Bremssteuereinheit zu bestimmen, und wobei der Bremsbefehl der erste Befehl als Reaktion darauf ist, dass die primäre Bremssteuereinheit (204a) die aktive Bremssteuereinheit ist.

8. Bremssystem nach Anspruch 7, wobei der Bremsbefehl der zweite Befehl ist, der von der sekundären Bremssteuereinheit (204b) als Reaktion darauf empfangen wird, dass die sekundäre Bremssteuereinheit (204b) die aktive Bremssteuereinheit ist.

9. Bremssystem nach einem der Ansprüche 6-8, wobei der erste Ferndatenleistungskonzentrator den ersten Befehl als Reaktion auf ein erstes Signal an den elektrischen Bremsaktuator sendet.

10. Bremssystem nach Anspruch 9, wobei der erste Ferndatenleistungskonzentrator den zweiten Befehl als Reaktion auf ein zweites Signal an den elektrischen Bremsaktuator sendet.

11. Bremssystem nach Anspruch 10, wobei das erste Signal die primäre Bremssteuereinheit (204a) als eine aktive Bremssteuereinheit identifiziert und das zweite Signal die sekundäre Bremssteuereinheit (204b) als die aktive Bremssteuereinheit identifiziert.

12. Bremssystem nach Anspruch 11, wobei der Ferndatenleistungskonzentrator das zweite Signal als Reaktion auf einen Fehler in der primären Bremssteuereinheit (204a) empfängt.

13. Luftfahrzeug, umfassend:
das System nach Anspruch 1, wobei das Luftfahrzeug eine Fahrwerksanordnung beinhaltet, die das Rad beinhaltet.

## Revendications

1. Système, comprenant :
une unité de commande de frein primaire (204a) ;
une unité de commande de frein secondaire (204b) ;
un premier concentrateur de puissance de données à distance configuré pour recevoir une première instruction à partir de l'unité de commande de frein primaire (204a) et une seconde instruction de l'unité de commande de frein secondaire (204b) ;
un actionneur de frein électrique configuré pour recevoir la première instruction ou la seconde instruction à partir du premier concentrateur de puissance de données à distance en réponse à un premier signal ;
un premier dispositif de commande d'actionneur de frein électrique couplé à l'actionneur de frein électrique ;
une première commande d'actionneur disposée dans le premier dispositif de commande d'actionneur de frein électrique, la première commande d'actionneur étant configurée pour recevoir la première instruction à partir de l'unité de commande de frein primaire (204a) et transmettre la première instruction au premier concentrateur de puissance de données à distance ;
**caractérisé par**
un second dispositif de commande d'actionneur de frein électrique couplé à l'actionneur de frein électrique ; et
une seconde commande d'actionneur disposée dans le second dispositif de commande d'actionneur de frein électrique, la seconde commande d'actionneur configurée pour recevoir la seconde instruction à partir de l'unité de commande de frein secondaire (204b) et transmettre la seconde instruction au premier concentrateur de puissance de données à distance.

2. Système selon la revendication 1, dans lequel l'unité de commande de frein primaire (204a) est en communication avec l'unité de commande de frein secondaire (204b) et dans lequel le premier concentrateur de puissance de données à distance transmet la première instruction reçue de l'unité de commande de frein primaire (204a) en réponse à la détermination par l'unité de commande de frein primaire (204a) et l'unité de commande de frein secondaire (204b) du fait que l'unité de commande de frein primaire (204a) est une unité de commande de frein active.

3. Système selon la revendication 1 ou 2, dans lequel le premier concentrateur de puissance de données à distance est configuré pour transmettre la première instruction à partir de la première commande d'actionneur à l'actionneur de frein électrique et ignorer la seconde instruction à partir de la seconde commande d'actionneur en réponse au premier signal.

4. Système selon la revendication 3, dans lequel le premier concentrateur de puissance de données à distance est configuré pour transmettre la seconde instruction à partir de la seconde commande d'actionneur et ignorer la première instruction à partir de la première commande d'actionneur en réponse à un second signal.

5. Système selon l'une quelconque revendication précédente, dans lequel la première instruction et la seconde instruction comportent les mêmes informations.

6. Système de freinage, comprenant :
une roue ;
le système selon la revendication 1, dans lequel l'actionneur de frein électrique est configuré pour appliquer une force de freinage à la roue ;
dans lequel le premier concentrateur de puissance de données à distance est configuré pour envoyer une instruction de freinage afin d'appliquer la force de freinage à l'actionneur de frein électrique ;
dans lequel l'unité de commande de frein primaire (204a) est configurée pour envoyer une première instruction au concentrateur de puissance de données à distance ; et
dans lequel l'unité de commande de frein secondaire (204b) est configurée pour envoyer une seconde instruction au concentrateur de puissance de données à distance, dans lequel l'instruction de freinage est au moins l'une e la première instruction ou de la seconde instruction.

7. Système de freinage selon la revendication 6, dans lequel l'unité de commande de frein primaire (204a) est en communication avec l'unité de commande de frein secondaire (204b) et est configurée pour déterminer une unité de commande de frein active et dans lequel l'instruction de freinage est la première instruction en réponse à l'unité de commande de frein primaire (204a) qui est l'unité de commande de frein active.

8. Système de freinage selon la revendication 7, dans lequel l'instruction de freinage est la seconde instruction reçue de l'unité de commande de frein secondaire (204b) en réponse à l'unité de commande de frein secondaire (204b) qui est l'unité de commande de frein active.

9. Système de freinage selon l'une quelconque des revendications 6 à 8, dans lequel le premier concentrateur de puissance de données à distance envoie la première instruction à l'actionneur de frein électrique en réponse à un premier signal.

10. Système de freinage selon la revendication 9, dans lequel le premier concentrateur de puissance de données à distance envoie la seconde instruction à l'actionneur de frein électrique en réponse à un second signal.

11. Système de freinage selon la revendication 10, dans lequel le premier signal identifie l'unité de commande de frein primaire (204a) comme une unité de commande de frein active et le second signal identifie l'unité de commande de frein secondaire (204b) comme l'unité de commande de frein active.

12. Système de freinage selon la revendication 11, dans lequel le concentrateur de puissance de données à distance reçoit le second signal en réponse à une erreur dans l'unité de commande de frein primaire (204a).

13. Aéronef, comprenant :
le système selon la revendication 1, dans lequel l'aéronef comporte un ensemble train d'atterrissage comportant la roue.
